# EUROPEAN PATENT APPLICATION

(11) **EP 1 844 909 A1**
(43) Date of publication of application: **17.10.2007**
(21) Application number: 06007597.5
(22) Date of filing: 11.04.2006
(51) Int. Cl.: B25J 9/16

(54) **Multi-input control of an industrial robot system**

(71) Applicant: ABB AB, 721 83 Västerås (SE)
(72) Inventor: Bird-Radolovic, Ian, 722 33 Västerås (SE)
(74) Representative: HOFFMANN EITLE

(57) **Abstract**

The present invention provide an industrial robot system with increased flexibility and control accuracy. The industrial robot system uses a common data bus connecting a master controller (16), different drive devices (20, 22), and sensors (24, 26). The sensors (24, 26) forward sensor data to the drive devices (20 22) via the common data bus (18). Controller unit in the drive devices (20, 22) process sensor data received via the common data bus (18) for control of at least one electric motor (M1, M2) being connected to the drive devices (20, 22). According to the present invention, delay times for providing sensor data to the drive devices (20, 22) is reduced, leading to a better control performance.

## Description

### FIELD OF THE INVENTION

The present invention relates to the field of industrial robot systems.

### BACKGROUND ART

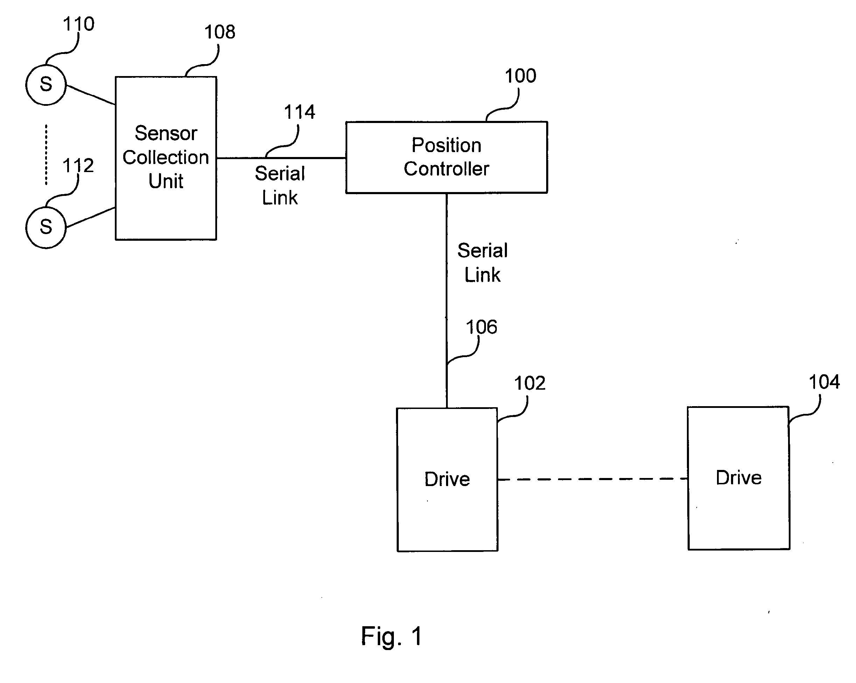

Conventionally, industrial robot systems use a structure as shown in Fig. 1.

As shown in Fig. 1, a position reference source 100, typically a centralized position controller, provides a control reference for electric motors controlled by drives 102, 104. Once the control reference values are generated, they are forwarded to the drives 102, 104 via a first serial link.

As shown in Fig. 1, the control reference source 100 is also connected to a sensor collection unit 108. The sensor collection unit 108 operatively receives sensor data from a plurality of sensors 110, 112 and forwards the generated sensor data to the control reference source 100 via a second serial link 114.

However, the conventional industrial robot system shown in Fig. 1 uses a first serial link 106 and a second serial link 114 to connect the position reference source 100 to the drives 102, 104 on the one hand and to the sensor collection unit 108 on the other hand.

Therefore, there are two communication delays for receipt of sensor data, e.g., measurement of positions of electric motors, and further for the forwarding of generated position reference data to the different drives 102, 104. This particularly affects performance, e.g., during acceleration of electric motors or during operation of the electric motors with variable speed.

Another problem with the conventional industrial robot systems is that the drives 102, 104 are operating according to a single input/single output mode. This complicates the handling of a plurality of input data at the drive devices for improved control accuracy.

### SUMMARY OF INVENTION

In view of the above, the object of the present invention is to provide an industrial robot system with increased flexibility and control accuracy.

According to a first aspect of the present invention, there is provided a drive device for an industrial robot system, comprising an interface unit that interfaces to a common data bus. At the same time, to the same common data bus, there is also connected at least one sensor generating sensor data to be processed in the drive device. The at least one sensor forwards sensor data to the drive device via the common data bus. Then, a controller unit in the drive device processes the sensor data received via the common data bus for control of at least one electric motor being connected to the drive device.

Therefore, according to the present invention, sensors and drives are connected to a common data bus. Therefore the delay time for providing sensor data to the drive devices is reduced, leading to a better control performance, e.g., a better high acceleration performance.

Also, as the drive device is connected via the common data bus to all sensors operated in the industrial robot system, this allows for multi-input control in the drive device.

According to a preferred embodiment of the present invention, there is generated a process control state data within the drive device which is then output to the common data bus for consideration and further drive devices attached to the common data bus.

Therefore, not only sensor data but also drives states, e.g., current speed or angle at a further drive device can be exchanged with the common data bus allowing not only multi-input control processes to be implemented but also the realization of distributed logic across different drive devices.

In particular, the drive device may be of the multi-input/multi-output type, which means that it receives a plurality of different sensor data and control process data and then generates a plurality of control signals for the control of a plurality of electric motors.

In conclusion, the present invention enables the application of multi-input/multi-output drive devices to increase visibility and accuracy of an industrial robot system while at the same time accelerating the processing speed therein.

A further aspect of the present invention relates to a distributed control system for multi-input control of an industrial robot.

From the overall perspective of control system architecture, the distributed control system comprises at least one drive device in the sense outlined above.
Further, there is provided at least one sensor which is operated for detection of an operative state of the industrial robot system, e.g., the state of an electric motor, the state of a security device, the states of currents and messages in the control system, etc. A master controller generates control reference data for the at least one drive device. Information exchange between the different units and the distributed control system is executed via a common single data bus adapted to send information messages for sensor data, control data, etc.

Therefore, according to the present invention it is suggested that drive units and sensors share the same common data bus. The master controller invokes sensor data from the sensors which reply with a message on the link. As the different units are connected to the same single common data bus, at the same time the drive devices receive the same data intended for the master controller, so that there is only a single communication delay.

Yet another advantage of providing a single common data bus is that more drive devices and sensors can be easily added to the common data bus, therefore increasing the flexibility for the controller system design. At the same time, different sensors such as force sensor, acceleration sensors, etc., can be easily added to the common data bus without the need for a new communication facility. As the common data bus may be high speed, the distributed control system executes real-time control.

A further advantage is that the common data bus may rely on an industrial standard for broadcasting of messages between all sensors and drive devices. By application of an industrial standard third party drive devices and sensors may be easily added to the common data bus, thus even further increasing network flexibility and scalability.

Also, the provision of a single common data bus provides a 'flat' communication architecture for increased processing speed. Control logic previously assigned to so-called access computers may be distributed over different drive devices so that, as an option, the previous access computer may be omitted, if desired so.

### DESCRIPTION OF DRAWING

In the following, the best mode and preferred embodiments of the present invention will be described with reference to the drawing, in which:
- Fig. 1: shows a schematic diagram of a conventional industrial robot system;
- Fig. 2: shows a schematic diagram of a drive device according to the present invention;
- Fig. 3: shows a flowchart of operation for the drive device shown in Fig. 2;
- Fig. 4: shows a schematic diagram of a multi-input control system for an industrial robot system according to the present invention;
- Fig. 5: shows a flowchart of operation for the multi-input control system shown in Fig. 4; and
- Fig. 6: shows a more specific example of the multiinput control system shown in Fig. 4.

### DESCRIPTION OF BEST MODE AND PREFERRED EMBODIMENTS

In the following, the best mode and preferred embodiments of the present invention will be explained with reference to the drawing. Insofar as specific features are explained, it should be noted that such features may be either implemented in hardware, in software, or any combination thereof.

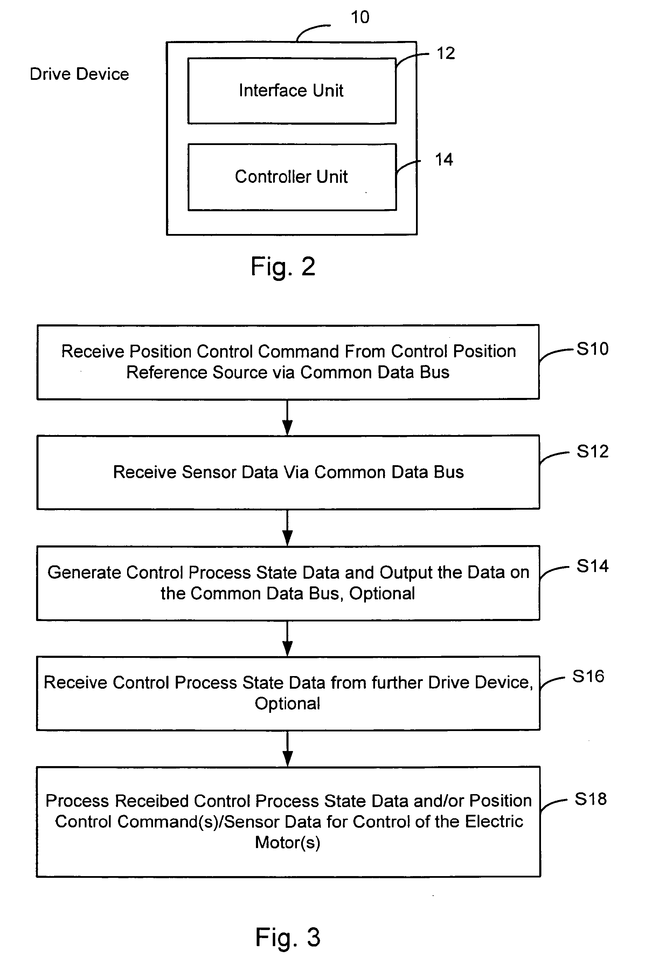

Fig. 2 shows a schematic diagram of the drive device for an industrial robot system according to the present invention.

As shown in Fig. 2, the drive device 10 comprises an interface unit 12 and a controller unit 14. The interface unit 12 is adapted to interface to a common data bus for receipt of at least sensor data from at least one sensor also being connected to a common data bus. Further, the controller unit 10 is adapted to process the sensor data for control of at least one electric motor being connected to the drive device 10.

Fig. 3 shows a flowchart of operation for the drive device shown in Fig. 2.

As shown in Fig. 3, operatively the interface unit 12 executes a step S10 to receive position control commands from a central position reference source via the common data bus. Further, operatively the interface unit 12 executes a step S12 to receive sensor data via the common data bus.

As shown in Fig. 3, optionally controller unit 14 may also execute a step S14 to generate control process state data reflecting the state of the control process executed in the drive device 10 for subsequent output thereof to the common data bus.

As shown in Fig. 3, optionally the interface unit 12 may execute a step S16 to receive control process state data from further drive devices attached to the common data bus.

As shown in Fig. 3, operatively the controller unit 14 executes a step S16 to process the received position control commands and sensor data for the control of at least one electric motor connected to the drive device. Optionally the controller unit 14 may execute the step S16 to also process the received control process state data for control of the at least one electric motor.

Therefore, according to the present invention, as all drive devices and sensors are attached to the same common data bus, e.g., a real-time digital communication link, e.g., the Ethernet Powerlink, all drive devices share the same sensor data without exchange of such data via a master controller or motion controller. This reduces significantly the communication delay and therefore improves industrial robot system control accuracy.

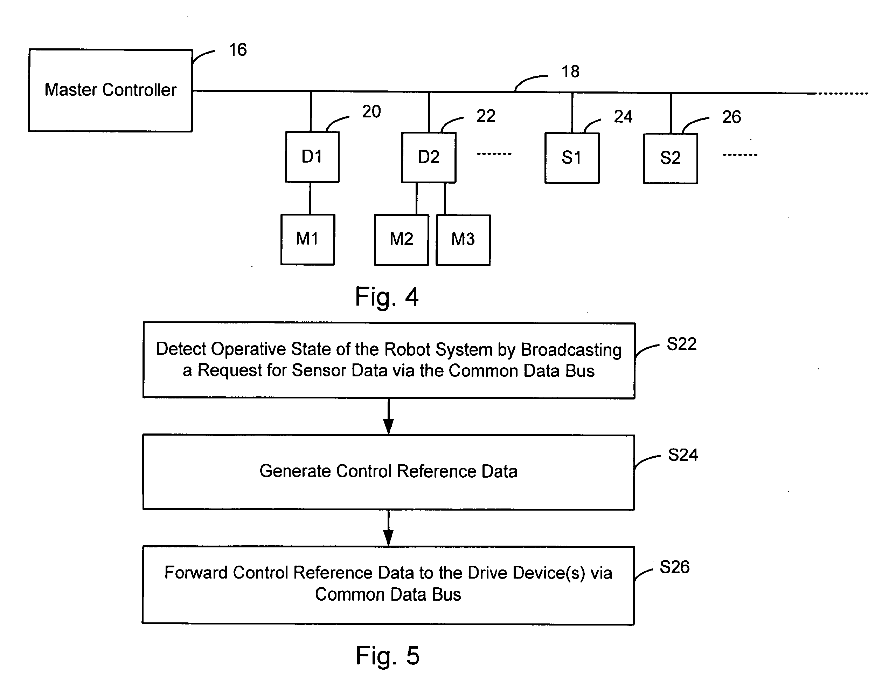

Fig. 4 shows a schematic diagram for a multi-input control system according to the present invention.

As shown in Fig. 4, in the distributed control system according to the present invention, a master controller 16 is connected to a common data bus 18. To the same common data bus there are connected at least one drive device 20, 22 and at least one sensor 24, 26. Each drive device may be adapted to control either one electric motor or plurality of electric motors, either according to a single or a multi-access operation of the industrial robot system.

Further, specific examples of sensors are, e.g., force sensors, encoder sensors, turning voltage sensors.

Fig. 5 shows a flowchart of operation of the distributed control system for a multi-input control as shown in Fig. 4.

As shown in Fig. 5, operatively the master controller 16 executes a step S22 to detect an operative state of the industrial robot system by sending a request for sensor data via the common data bus 18. In response to this send request, each of the addressed sensor 24, 26 will output related sensor data on the common data bus 18 for sending the sensor data back to the master controller 16. At the same time, all attached drive units 20, 22 may receive the same sensor data, which is therefore not communicated via centralized master controllers but directly exchanged between the sensor 24, 26 and the drive 20, 22 for increased communication speed.

As shown in Fig. 5, after detection of the operative state, operatively the master controller 16 will execute a step S24 to generate control reference data for the operation of the different drive devices 20, 22.

As shown in Fig. 5, operatively the master controller 16 will then execute a step S26 to forward and send control reference data to the drive devices 20, 22 via the common data bus 18.

It should be noted that according to the present invention, the distributed control system relies on distributed logic in the different drive devices contrary to the prior art, which uses intermediate motion controllers. Nevertheless, if desired so, also the architecture shown in Fig. 4 would be suitable to attach additional motion controller subsystems.

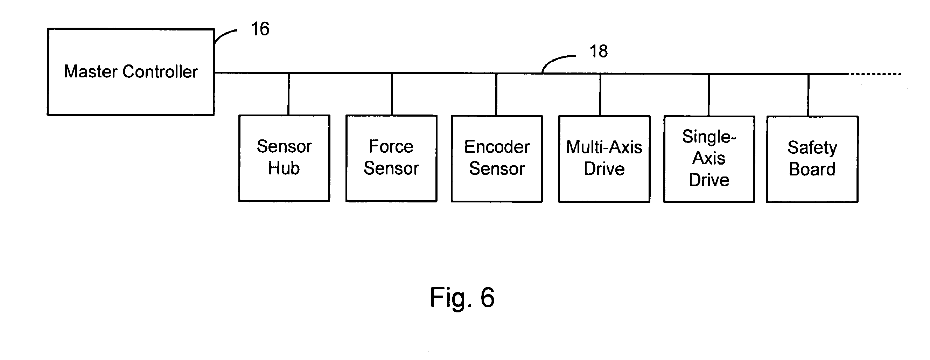

Fig. 6 shows a specific example of the decentralized distributed multi-input control architecture according to the present invention.

Here, the master controller 16 is connected to a plurality of drive devices, e.g., a drive device for multi-access operation as outlined above, a drive device for single access operation, an encoder sensor, a force sensor, or a sensor hub collecting sensor data from a plurality of sensors. The master controller 16 forwards a request for sensor data to a sensor. Sensor data is then send back and notified by drive devices attached to the common data bus 18.

As shown in Fig. 6, besides those components already mentioned above, there may also be attached a safety board 28, which detects industrial robot system states such as contact states, necessary to remove power for safety reasons, key switch states, etc. Although not shown in Fig. 6, to the common data bus 18 there may also be attached a contact board to remove power by electromechanical means, etc.

As shown in Fig. 6, through attachment of a safety board 28 to the common data bus, according to the present invention it is possible to distribute safety related information directly without undue time delay.

Further to the above, as one example of application for the present invention, there could be considered an industrial robot system where two electric motors are required to move in synchronism with each other. Here, the master controller 16 would send the same position control information or speed reference to the two related drive devices. As the controller units in each of the activated drive devices see all the information from the sensor(s), each controller unit in each drive device knows whether it should run faster or slower than the other to compensate for the speed difference. According to the present invention, this is achieved without additional physical connections by connecting the sensors to the common data bus and making available the related sensor data to all drive devices in the common data bus 18. Also, each drive device may listen for the sensor input data at the same time of generation, thus allowing for much tighter synchronization.

Another example would be a six axes robot running in force control. The related manipulator has six electric motors with six position sensors and a single force sensor. To control the force/torque of the six electric motors in such a way that the force in the XYZ coordinates at the force sensor is controlled, the controller of each electric motor has access to all six position sensors and the force sensor. This way, the control for a single electric motor depends on the state of other electric motors. To do this with a single access drive device would require each drive device to have seven sensor inputs under conventional technology. However, according to the present invention, the multi-input control system provides a central control in the master controller which takes the position data and outputs six different torque control references to the drive devices. According to the present invention, there is no need for multiple connections to the drive devices or to a master controller, since each drive device is virtually connected to every available sensor. All drive devices receive the information from a particular sensor at the same time due to the fact that the sensor sends or multicasts its sensor data on the common data bus. The only necessity is to provide functionality within the drive device, e.g., through appropriate software, to make use of the extra sensor data inputs and to run more complex control algorithms.

Yet another example is the control of three axes via by a single drive device. According to the present invention, as all the sensors are virtually connected to the drive device, and since they all send their position data on the common data bus when instructed to do so, the drive device handling the three axes may simply choose to 'listen' to the correct sensor data, when it is controlling a particular electric motor.

According to another preferred embodiment of the present invention there is provided a computer program product directly loadable into the internal memory of a controller of a drive device comprising software code portions for performing the inventive control process when the product is run on a controller of the drive device.

Therefore, the present invention is also provided to achieve an implementation of the inventive method steps on computer or processor systems. In conclusion, such implementation leads to the provision of computer program products for use with a computer system or more specifically a controller of a drive device.

This programs defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or the Internet and/or telephone networks via modems or other interface devices. It should be understood that such media, when carrying processor readable instructions implementing the inventive concept represent alternate embodiments of the present invention.

## Claims

1. Drive device for an industrial robot system, comprising:
- an interface unit () adapted to interface to a common data bus () for receipt of sensor data from at least one sensor () being connected to the common data bus (); and
- a controller unit () adapted to process the sensor data for control of at least one electric motor () being connected to the drive device.

2. Drive device according to claim 1, ***characterized in that*** the controller unit () is adapted to generate control process state data and that the interface unit () is adapted to output the control process state data to the common data bus ().

3. Drive device according to claim 1 or 2, ***characterized in that*** the interface unit () is adapted to receive control process state data in association with the control process state of a further drive device being connected to the common data bus () and that the controller unit () is adapted to process the received control process state data for control of the at least one electric motor ().

4. Drive device according to one of the claims 1 to 3, ***characterized in that*** the interface unit () is adapted to receive position control commands from a central position reference source unit () and that the controller unit () is adapted to process the received position control commands for control of the at least one electric motor ().

5. Drive device according to one of the claims 1 to 4, ***characterized in that*** the interface unit () is adapted to interface to the common data bus () as a real time data bus supporting message broadcasting.

6. Drive device according to one of the claims 1 to 5, ***characterized in that*** it is of the multi-input/multiple-output type such that
- the drive device receives sensor data from at least one sensor () and control process state data from at least one further drive device for control of at least two electric motors (), or such that
- the drive device receives sensor data from at least two sensors () for control of at least two electric motors (), or such that
- the drive device receives control process state data from at least two further drive devices for control of at least two electric motors ().

7. Distributed controller for multi-input control of an industrial robot system, comprising:
- at least one drive device () according to one of the claims 1 to 6 adapted to control at least one electric motor () being connected to the drive device ();
- at least one sensor () adapted to detect an operative state of the at least one electric motor ();
- a master controller () adapted to provide control reference data for the at least one drive device (); and
- a common data bus () adapted to broadcast control reference data and/or sensor data between the master controller (), the at least one drive device (), and/or the at least one sensor ().

8. Distributed controller according to claim 7, ***characterized in that*** the master controller () is adapted to send a request for sensor data to the at least one sensor () and that the at least one sensor () is adapted to send the requested sensor data on the common data bus ().

9. Distributed controller according to claim 7 or 8, ***characterized in that*** the at least one drive device () is adapted to broadcast control process state data in association with its operation on the common data bus ().

10. Method of operating a drive device in an industrial robot system, comprising the steps:
- receiving sensor data from at least one sensor () being connected to the drive device via a common data bus; and
- processing the sensor data for control of at least one electric motor () being connected to the drive device.

11. Method according to claim 10, ***characterized in that*** it comprises a step to generate control process state data with respect to the control of the at least one electric motor and a step to output the control process state data to the common data bus ().

12. Method according to claim 10 or 11, ***characterized in that*** it comprises a step of receiving control process state data in association with the control process state of a further drive device being connected to the common data bus () and a step of processing the received control process state data for control of the at least one electric motor ().

13. Method according to one of the claims 10 to 12, ***characterized in that*** it comprises a step of receiving position control commands from a central position reference source unit () and a step of processing the received position control commands for control of the at least one electric motor ().

14. Method according to one of the claims 1 to 5, ***characterized in that*** the drive device it is of the multi-input/multiple-output type and adapted to execute one of the following steps:
- receiving sensor data from at least one sensor () and control process state data from at least one further drive device for control of at least two electric motors (), or
- receiving sensor data from at least two sensors () for control of at least two electric motors (), or
- receiving control process state data from at least two further drive devices for control of at least two electric motors ().

15. Method of multi-input control of an industrial robot system comprising at least one electric motor (), comprising the steps:
- detecting an operative state of the industrial robotic system using at least one sensor ();
- generating control reference data in a master controller () in view of the detected operative state; and
- forwarding generated control reference data to the at least one drive device (); wherein
- control reference data and/or sensor data is broadcast on a common data bus () between the at least one sensor (), the master controller (), and/or the at least one drive device ().

16. Method according to claim 15, ***characterized in that*** it comprises a step of sending a request for sensor data from the master controller () to the at least one sensor () and a step of sending the requested sensor data on the common data bus () from that the at least one sensor () on the common data bus.

17. Method according to claim 15 or 16, ***characterized in that*** it comprises a step of broadcasting control process state data in association with the operation of the at least one drive device () from the at least one drive device () on the common data bus ().

18. A computer program product directly loadable into the internal memory of a drive device, comprising software code portions for performing the steps of one of the claims 10 to 14, when the product is run on a controller unit of the drive device.
